# EUROPEAN PATENT APPLICATION

(11) **EP 3 826 210 A1**
(43) Date of publication of application: **26.05.2021**
(21) Application number: 19837003.3
(22) Date of filing: 12.07.2019
(51) Int. Cl.: H04L 5/00

(54) **METHOD AND DEVICE FOR TRANSMITTING CONTROL SIGNALING, SERVING BASE STATION, AND STORAGE MEDIUM**

(30) Priority: 20.07.2018 CN 201810805850
(71) Applicant: ZTE Corporation, shenzhen Guangdong 518057 (CN)
(72) Inventor: YANG, Li, Shenzhen, Guangdong 518057 (CN)
(74) Representative: Regimbeau
(86) International application number: PCT/CN2019/095801
(87) International publication number: WO 2020/015586

(57) **Abstract**

Provided are a method and device for transmitting control signaling, a serving base station, a storage medium, and an electronic device. The method comprises: expanding, by a first serving base station, content of a cell of original control signaling to obtain control signaling carrying indication information, where the indication information is used for indicating whether the first serving base station supports a target service in a current node configuration and status condition, and the first serving base station has established a connection to a terminal; and transmitting, by the first serving base station, the control signaling carrying the indication information to a logical upper layer or logical upstream.

## Description

This application claims priority to Chinese Patent Application No. 201810805850.7 filed with the CNIPA on Jul. 20, 2018, the disclosure of which is incorporated herein by reference in its entirety.

### TECHNICAL FIELD

The present application relates to the field of mobile communications and, specifically, to a method and device for transmitting control signaling, a serving base station, a storage medium, and an electronic device.

### BACKGROUND

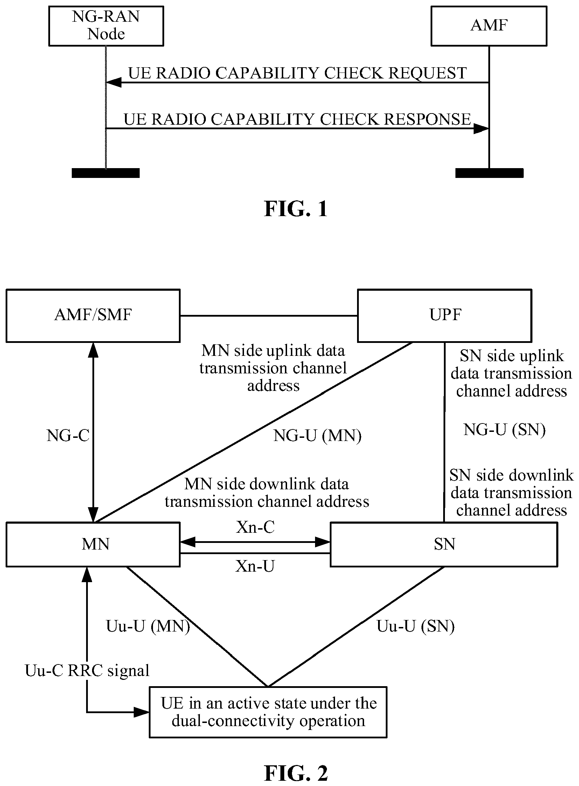

For a fifth Generation (5G) next generation radio access network (NG-RAN) system, both a network side and a terminal (user equipment (UE)) optionally support a voice service. When one of the network side and the UE cannot support the voice service, the processing manner of fallback to an old radio access type (RAT)-type network is adopted. The 5G system introduces at an NG interface a process of terminal radio capability check (UE Radio Capability Check). As shown in FIG. 1, the process is specifically as follows: an access mobility function (AMF), which is a 5G core network (5GC) control plane entity, transmits a terminal radio capability check request message (UE RADIO CAPABILITY CHECK REQUEST) to an NG-RAN node (e.g., a gNB or an NG-eNB), and based on this message, the NG-RAN node decides the radio capability of the current serving UE and the network side function configuration to determine whether this terminal can support an Internet protocol multimedia subsystem (IMS) voice service. When the function configuration within the NG-RAN node changes or when the UE moves to a new target NG-RAN node base station, the AMF must re-initiate the NG adaptation protocol (NGAP) UE radio capability check process several times to obtain the latest result about the IMS voice service support capability of a single base station or multiple base stations on the network side; otherwise, the AMF may be out-of-synchronization with the current NG-RAN node on the status of the capability for supporting the IMS voice service, which may result in the subsequent establishment failure of the IMS voice service and other undesirable consequences.

In the 5G system, the terminal (UE) supports single-connectivity (SC) and dual/multiple-connectivity (DC/MC) configuration and operation functions. However, only a master node (MN) is capable of establishing and maintaining an NG-C connection with the core network control plane entity AMF, and the related architecture is shown in FIG. 2. When the function configuration within a current serving secondary node (SN) of the terminal (UE) changes or when the UE moves to a new target SN, the MN must re-initiate the NG-RAN Xn adaptation protocol (Xn AP) UE radio capability check process several times to the SN to obtain the latest results about the IMS voice service support capability of an SN side; otherwise, the serving MN may be out-of-synchronization with the current SN on the status of the IMS voice service support capability, which may result in the subsequent shunt establishment failure of the IMS voice service and other undesirable consequences.

Additionally, if the above-mentioned IMS voice service is abstracted into a certain "special type of user service" (also called "target service"), that is, such services require the support of a set of certain special optional capabilities and functions of the network side and the terminal (UE), then processing similar to the IMS Voice can be performed on more future "special types of user services". Therefore, the present application aims to generalization for more future "special types of user services" rather than only for IMS voice services, thereby reducing unnecessary new process design.

For a terminal (UE) under SG-oriented multiple connectivity configurations, the upper layer network entity (AMF/SMF or master node) requires multiple signaling overheads to obtain the current function configuration on the side of the serving base station (master node or secondary node) to determine whether the serving base station can support the "target service". As a result, steps in a terminal radio capability check process are cumbersome, whether the current function configuration on the serving base station side supports the target service cannot be known in time, and thus the data streams bearing user services cannot be distributed in the next generation radio access network in a balanced and efficient way. However, there is no good solution to these problems.

### SUMMARY

Embodiments of the present application provide a method and device for transmitting control signaling, a serving base station, a storage medium, and an electronic device, to at least solve problems in the existing art that steps in a terminal radio capability check process are cumbersome, whether the current function configuration on the serving base station side supports the target service cannot be known in time, and thus the data streams bearing user services cannot be distributed in the next generation radio access network in a balanced and efficient way.

A method for transmitting control signaling is provided according to one embodiment of the present application. The method includes: expanding, by a first serving base station, content of a cell of original control signaling to obtain control signaling carrying indication information, where the indication information is used for indicating whether the first serving base station supports a target service in a current node configuration and status condition, and the first serving base station has established a connection to a terminal; and transmitting, by the first serving base station, the control signaling carrying the indication information to a logical upper layer or logical upstream.

A device for transmitting control signaling is further provided according to another embodiment of the present application. The device is applied to a first serving base station and includes: an expansion module, which is configured to expand content of a cell of original control signaling to obtain control signaling carrying indication information, where the indication information is used for indicating whether the first serving base station supports a target service in a current node configuration and status condition, and the first serving base station has established a connection to a terminal; and a transmission module, which is configured to transmit the control signaling carrying the indication information to a logical upper layer or logical upstream.

A serving base station is further provided according to another embodiment of the present application. The serving base station includes: an expansion module, which is configured to expand content of a cell of original control signaling to obtain control signaling carrying indication information, where the indication information is used for indicating whether the first serving base station supports a target service, and the first serving base station has established a connection to a terminal; and a transmission module, which is configured to transmit the control signaling carrying the indication information to an upper-layer network entity.

A storage medium is further provided according to another embodiment of the present application. The storage medium stores a computer program. The computer program is configured to, when executed, perform the steps of any one of the preceding method embodiments.

An electronic apparatus is further provided according to another embodiment of the present application. The electronic apparatus includes a memory and a processor. The memory stores a computer program, and the processor is configured to execute the computer program to perform the steps in any one of the preceding method embodiments.

Through the present application, after the terminal establishes a connection to the serving base station, when transmitting control signaling to a logical upper layer or logical upstream, the serving base station expands content of a cell of original control signaling and adds the indication information for indicating whether the serving base station side supports a target service in a current node configuration and status condition to the original control signaling. In this case, what the serving base station transmits to the logical upper layer or the logical upstream is control signaling carrying the indication information described above, that is, the indication information indicating whether the base station supports the target service is transmitted by the associated control signaling, and thus no new signaling overhead is added. Meanwhile, the above operations proactively let the upper layer network entity know whether the serving base station side supports the target service in the current node configuration and status condition, thereby avoiding the signaling overheads caused by the upper layer network entity performing the terminal radio capability check several times and letting the upper layer network entity know timely whether the target service can be issued to the serving base station. Therefore, problems in the related art that steps in a terminal radio capability check process are cumbersome, whether the current function configuration on the serving base station side supports the target service cannot be known in time, and thus the data flows bearing user services cannot be distributed in the next generation radio access network in a balanced and efficient way can be solved. In this manner, the upper layer network entity can flexibly establish or shunt target service to the serving base station side, thereby avoiding unnecessary cross-system fallback processing of the terminal (UE) and implementing the load balancing of user service data flows in the next generation radio access network.

### BRIEF DESCRIPTION OF DRAWINGS

The drawings described herein are used to provide a further understanding of the present application and form a part of the present application. The exemplary embodiments and descriptions thereof in the present application are used to explain the present disclosure and not to limit the present application in any improper way. In the drawings:
FIG. 1 is a flowchart of UE radio capability check in the related art;
FIG. 2 is an architecture diagram of a terminal (UE) in an active dual-connectivity operation mode in the related art;
FIG. 3 is an architecture diagram for the connection between an AMF/SMF and an MN and an SN in an active operation mode in the related art;
FIG. 4 is a block diagram of hardware of a mobile terminal for a method for transmitting control signaling according to an embodiment of the present disclosure;
FIG. 5 is a flowchart of a method for transmitting control signaling according to an embodiment of the present disclosure;
FIG. 6 is a schematic diagram of a transmission of enhanced content of an existing NGAP process message when a UE in a single-connectivity operation mode according to an embodiment of the present disclosure;
FIG. 7 is a schematic diagram of a transmission of enhanced content of an existing NGAP process message when a UE is moving according to an embodiment of the present disclosure;
FIG. 8 is a schematic diagram of a transmission of enhanced content of an existing NGAP process message when a UE is in dual/multiple-single connectivity mode according to an embodiment of the present disclosure;
FIG. 9 is a schematic diagram of a transmission of enhanced content of an existing XnAP process message when a UE is in dual/multiple-single connectivity mode according to an embodiment of the present disclosure;
FIG. 10 is a structural block diagram of a device for transmitting control signaling according to an embodiment of the present disclosure;
FIG. 11 is a flowchart of a method for transmitting control signaling according to embodiment 1 of the present application;
FIG. 12 is a flowchart of a method for transmitting control signaling according to embodiment 2 of the present application;
FIG. 13 is a flowchart of a method for transmitting control signaling according to embodiment 3 of the present application;
FIG. 14 is a flowchart of a method for transmitting control signaling according to embodiment 4 of the present application;
FIG. 15 is a flowchart of a method for transmitting control signaling according to embodiment 5 of the present application; and
FIG. 16 is a flowchart of a method for transmitting control signaling according to embodiment 6 of the present application.

### DETAILED DESCRIPTION

Hereinafter, the present application will be described in detail with reference to drawings and in conjunction with embodiments. It is to be noted that if not in collision, the embodiments and features therein in the present application may be combined with each other.

It is to be noted that the terms such as "first" and "second" in the description, claims and drawings of the present application are used to distinguish between similar objects and are not necessarily used to describe a particular order or sequence.

A fourth Generation (4G), also referred to as the LTE long term evolution (LTE), cellular mobile communication system includes a 4G core network (CN) and a radio access network (RAN), where the 4G CN includes basic network element nodes such as a mobility management entity (MME), a serving gateway (SGW) and a public data network (PDN) gateway (PGW), and the RAN includes an evolved node B (eNB). A fifth Generation (5G) cellular mobile communication system developed after the 4G cellular mobile communication system includes a next generation core network (5GC) and a next generation radio access network (NG-RAN), where the 5GC includes basic network element nodes such as an access mobility function (AMF), a session management function (SMF) and a user plane function (UPF), and the NG-RAN includes base stations of at least two different radio access types (RATs), i.e., an Ng-eNB evolved based on a 4G eNB (in which the air interface still supports an evolved universal mobile telecommunications system terrestrial radio access (E-UTRA) type) and a newly designed gNB (in which the air interface supports new radio (NR) type base stations). The NG-RAN base station is connected to the 5GC through an NG interface (including a next generation-control plane (NG-C) connection and a next generation-user plane (NG-U) connection), and the NG-RAN base stations are connected through an Xn interface (including an Xn-control plane (Xn-C) connection and an Xn-user plane (Xn-U) connection). The above control plane connections are used for transmitting control signaling between network element nodes, and the above user plane connections are used for transmitting data and data packets of a user service.

Since for the 4G system, also referred to as the LTE system, the early design focuses on broadband data services in the packet switch (PS) domain, such as large data file transfer, various Internet data application services, etc., such a system cannot effectively support user voice services at the levels of 4G LTE CN and RAN. When a user needs to perform a voice service, the processing of voice service fallback from the 4G to 3G or 2G network is usually adopted, and this fallback process migrates the terminal (i.e., UE) back to the old RAT-type network. In the subsequent evolution version of LTE, at the levels of 4G CN and RAN, the user voice services such as IMS voice services (IMS Voice) may be optionally supported through functional supplements and enhancements such as semi-static scheduling (SPS) enhancements, transmission time interval (TTI) binding, etc. of the version. In this case, the user voice service can be directly borne and served end-to-end in the 4G network, but the premise is that both the network side and the terminal (UE) can support a voice enhancement function set corresponding to the IMS Voice.

For the 5G NG-RAN system, similarly, both the network side and the terminal (UE) optionally support voice services. When one of the network side and the terminal (UE) cannot support the voice services, the processing manner of fallback to the old RAT-type network is also adopted. The 5G system introduces at the NG interface a process of terminal radio capability check (UE Radio Capability Check). As shown in FIG. 1, the process is specifically as follows: the 5GC control plane entity AMF transmits a terminal radio capability check request message (UE RADIO CAPABILITY CHECK REQUEST) to an NG-RAN node (e.g., a gNB or an NG-eNB), and based on this message, the NG-RAN node decides a radio capability of a current serving UE and a network side function configuration to determine whether this terminal can support the IMS voice service. After the deciding is completed, the NG-RAN node returns an IMS voice support indicator to the AMF through a terminal radio capability check response message (UE RADIO CAPABILITY CHECK RESPONSE). If the value of the IMS voice support indicator is Supported, it indicates that the AMF can directly establish bearer for an IMS voice service and for this UE in a 5G network. If the value of the IMS voice support indicator is Not Supported, it indicates that the AMF cannot directly establish and bear the IMS voice service in the 5G network for this UE, and the NG-RAN 5 thus also adopts the processing manner of voice service fallback from 5G to 4G or 3G or 2G network. For the above process of UE Radio Capability Check, the terminal radio capability check request message is always initiated by the core network entity AMF, and then the NG-RAN Node base station decides the radio capability of the current UE and the network side function configuration according to the terminal radio capability check request message issued by the AMF to further generate a deciding result and feeds back the deciding result to the AMF. Therefore, when the function configuration within the NG-RAN node changes or when the UE moves to a new target NG-RAN node base station, the AMF must re-initiate the NG adaptation protocol (NGAP) UE radio capability check process several times to obtain the latest result about the IMS voice service support capability of a single base station or multiple base stations on the network side; otherwise, the AMF may be out-of-synchronization with the current NG-RAN node on the status of the capability for supporting the IMS voice service, which may result in the subsequent establishment failure of the IMS voice service and other undesirable consequences.

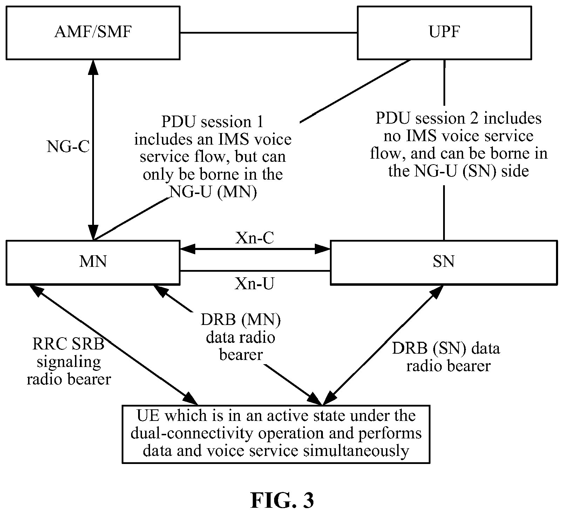

In the 5G system, the terminal (UE) supports single-connectivity (SC) and dual/multiple-connectivity (DC/MC) configuration and operation functions. In the SC mode, the UE has only one data transmission channel (radio link) over both an air interface and a network side. In the DC/MC mode, the UE has two or more data transmission channels (radio link) over both the air interface and the network side. To facilitate the understanding, the following is illustrated by using a UE in the DC mode as an example. The single connectivity is a special case of the dual connectivity in which a master node (MN) (or M-Node or M-NG-RAN Node) side is only considered, that is, all secondary data transmission channels/secondary radio links related to a secondary node (SN) (or S-Node or S-NG-RAN Node) are deleted, while the MC is further dimensional extension of the DC on the configuration and operation of more links. In the DC mode, two separate radio link connections (Radio Link) (i.e., air interface data transmission channels) are established and maintained between the UE and two NG-RAN base stations simultaneously over the air interface. One of the base stations is referred to as the master node (MN), and the other is referred to as the secondary node (SN). Two independent network side NG-U connections (i.e., network data transmission channels) between the MN and a user-plane network element entity (i.e., UPF) of the core network and between the SN and the UPF are established and maintained simultaneously over the NG interface. However, the NG-C connection with the control-plane network element entity AMF of the core network is established and maintained only for the MN. The related architecture is shown in FIG. 2. In FIG. 2, the 5G core network element control plane (next generation-control plane (NG-C)) connection, the inter-NG-RAN base station control plane (Xn-control plane (Xn-C)) connection, and the air interface control plane (Uu-control plane (Uu-C)) connection represent the control plane connections between different network element nodes, i.e., connections for transmitting network control signaling, and 5G core network element user plane (next generation-user plane (NG-U)) connection, the inter-NG-RAN base station user plane (Xn-user plane (Xn-U)) connection, and the air interface user plane (Uu-user plane (Uu-U)) connection represent the user plane connections between different network element nodes, i.e., connections for transmitting user service data. The NG-U (MN) provides a data transmission channel between the UPF and the MN for transmitting uplink and downlink user service data packets borne by anchors on a protocol data unit session (PDU Session) or quality of service flows (QoS Flows) of the MN side. Similarly, the NG-U (SN) provides a data transmission channel between the UPF and the SN for transmitting uplink and downlink user service packets borne by anchors on "shunted" PDU Session or QoS Flows of the SN side. Multiple data transmission channels on the MN side and the SN side are established or modified through interaction using NG-C + Xn-C control plane signaling process. Since there is no NG-C control plane connection between the SN and the AMF/SMF, all configuration information on the SN side must interact with the MN or be relayed to the AMF/SMF by the MN through an Xn-C control plane link. However, since the current NG interface UE radio capability check process disclosed by the 3GPP is only oriented to a terminal (UE) in a 5G SC operation mode, but not to a UE in a 5G DC/MC operation mode, the AMF/SMF can only know whether a UE capability and a function configuration on the MN side can effectively support the IMS voice service; but the AMF/SMF and MN cannot know whether a UE capability on the SN side and a local function configuration on the SN side can effectively support IMS voice service. If the shunted SN does not support the IMS voice service, the service fails. Therefore, for security, the AMF/SMF and the MN do not shunt PDU Session/QoS Flows containing IMS voice services to the SN side, but have to keep the MN trying to bear IMS Voice services, as shown in FIG. 3. If the MN cannot support the IMS voice service either, the terminal is forced to exit the current 5G DC/MC operation and fall back to the old RAT-type network, resulting in an inter-system handover or a redirection operation, bringing a large amount of process signaling, and degrading the user service experience because the comprehensive performance of the 4G/3G/2G network fell back is not as good as the current 5G network in all aspects. Similarly, if a process similar to the above NGAP UE radio capability check is transferred to the Xn interface, the process still needs to be initiated by the MN, and the SN then further generates the deciding result based on the current UE radio capability and SN network side function configuration issued by the MN and then feeds back the deciding result to the MN. When the function configuration within a current serving SN of the terminal (UE) changes or when the UE moves to a new target SN, the MN must re-initiate the NG-RAN Xn adaptation protocol (Xn AP) UE radio capability check process several times to obtain the latest results about the IMS voice service support capability of the SN side; otherwise, the serving MN may be out-of-synchronization with the current SN on the status of the capability for supporting the IMS voice service, resulting in the subsequent shunt establishment failure of the IMS voice service and other undesirable consequences.

Additionally, if the above-mentioned IMS voice service is abstracted into a certain "special type of user service" (also called "target service"), that is, such services require the support of a certain special set of optional capabilities and functions of the network side and the terminal (UE), then the processing similar to the IMS Voice can be performed on more future "special types of user services". Therefore, the present application aims to generalization for more future "special types of user services" rather than only for IMS voice services, thereby reducing unnecessary new process design.

### Embodiment one

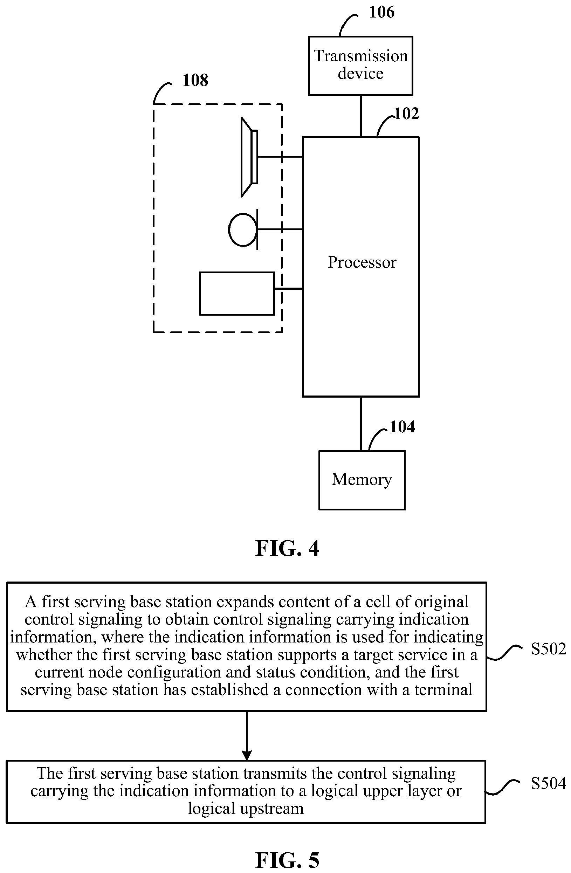

The method embodiment provided in Embodiment one of the present application may be executed in a mobile terminal, a computer terminal, or other similar computing apparatuses. Using the method embodiment to be executed in the mobile terminal as an example, FIG. 4 is a block diagram of hardware of a mobile terminal for a method for transmitting control signaling according to an embodiment of the present application. As shown in FIG. 4, a mobile terminal 10 may include one or more (only one is shown in FIG. 4) processors 102 (the processor 102 may include, but is not limited to, a microprocessor such as a microprogrammed control unit (MCU), a programmable logic device such as a field-programmable gate array (FPGA) or other processing apparatuses) and a memory 104 used for storing data. Optionally, the mobile terminal may further include a transmission device 106 for a communication function and an input/output device 108. It is to be understood by those of ordinary skill in the art that the structure shown in FIG. 4 is merely illustrative and not intended to limit the structure of the preceding mobile terminal. For example, the mobile terminal 10 may further include more or fewer components than the components shown in FIG. 4, or may have a configuration different from the configuration shown in FIG. 4.

The memory 104 may be configured to store a computer program, such as a software program and a module of application software, e.g., the computer program corresponding to the method for transmitting control signaling in the embodiment of the present disclosure. The processor 102 executes the computer program stored in the memory 104 to perform various functional applications and data processing, that is, to implement the method described above. The memory 104 may include a high-speed random-access memory and may further include a nonvolatile memory such as one or more magnetic storage apparatuses, flash memories, or other nonvolatile solid-state memories. In some examples, the memory 104 may further include memories that are remotely disposed with respect to the processors 102. These remote memories may be connected to the mobile terminal 10 via a network. The examples of the preceding network include, but are not limited to, the Internet, an intranet, a local area network, a mobile communication network, and a combination thereof.

A transmission apparatus 106 is configured to receive or transmit data via a network. A specific example of the preceding network may include a wireless network provided by a communication provider of the mobile terminal 10. In an example, the transmission apparatus 106 includes a network interface controller (NIC). The NIC may be connected to other network devices via a base station, and thus communicate with the Internet. In an example, the transmission apparatus 106 may be a radio frequency (RF) module. The RF module is configured to communicate with the Internet in a wireless way.

In this embodiment, a method for transmitting control signaling executed on the preceding mobile terminal is provided. FIG. 5 is a flowchart of a method for transmitting control signaling according to an embodiment of the present disclosure. As shown in FIG. 5, the method includes steps described below.

In step S502, a first serving base station expands content of a cell of original control signaling to obtain control signaling carrying indication information, where the indication information is used for indicating whether the first serving base station supports a target service in a current node configuration and status condition, and the first serving base station has established a connection with a terminal.

In step S504, the first serving base station transmits the control signaling carrying the indication information to a logical upper layer or logical upstream.

Through the above steps, problems in the related art that steps in a terminal radio capability check process are cumbersome, whether the current function configuration on the serving base station side supports the target service cannot be known in time, and thus the problem that the data flows bearing user services cannot be distributed in the next generation radio access network in a balanced and efficient way can be solved. In this manner, the upper layer network entity can flexibly establish or shunt target service to the serving base station side, thereby avoiding unnecessary cross-system fallback processing of the terminal (UE) and implementing the load balancing of user service data flows in the next generation radio access network. It is to be noted that the premise of the above method is that the terminal supports the target service by default. When the first serving base station obtains the configuration information of the terminal and knows that the terminal supports the target service, the first serving base station determines whether the first serving base station itself supports the target service, and then transmits the indication information to the logical upper layer or logical upstream. The indication information may carry the configuration and status conditions of both the terminal and the first serving base station at a current node, or may only carry the configuration and status conditions of the first serving base station at the current node. The indication information indicating whether the base station supports the target service is transmitted by the associated control signaling, which does not add any new signaling overhead and proactively lets the upper layer network entity know whether the serving base station side supports the target service in the current node configuration and status condition.

Optionally, the step S502 can be implemented in the following manner: in a case where the connection established between the first serving base station and the terminal is an initial service connection, the step in which the first serving base station expands the content of the cell of the original control signaling includes at least one of: the first serving base station expands content of a cell of an initial terminal message (INITIAL UE MESSAGE), the first serving base station expands content of a cell of an initial context setup response message (INITIAL CONTEXT SETUP RESPONSE), the first serving base station expands content of a cell of a terminal capability information indication message (UE CAPABILITY INFO INDICATION), or the first serving base station expands content of a cell of an uplink non-radio access layer transport message (UPLINK NAS TRANSPORT).

It is to be noted that the initial service connection may be understood as that a UE which is initially idle enters the first serving base station and is in the coverage of a certain serving cell of the first serving base station, which is equivalent to that the initial connection is established between the UE and the first serving base station.

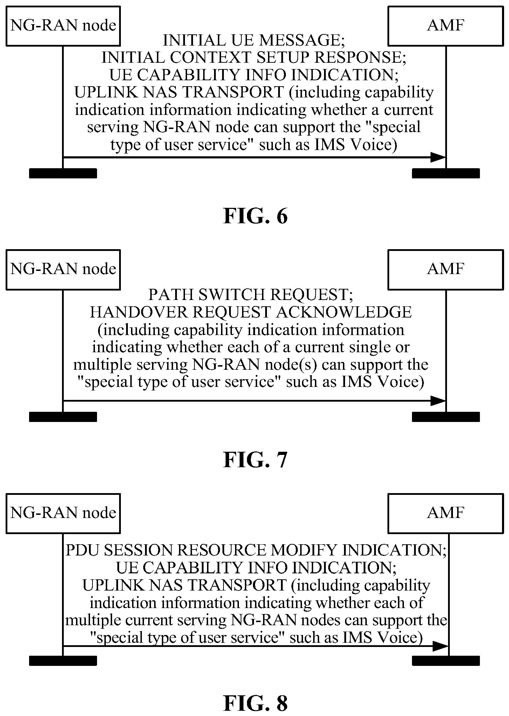

FIG. 6 is a schematic diagram of a transmission of enhanced content of an existing NGAP process message when a UE is in a single connectivity operation mode according to an embodiment of the present disclosure. As shown in FIG. 6, the above operations can be understood as that for a terminal (UE) which is not undergoing any serving base station change and is not in the DC/MC configuration operation, the NG-RAN node adds or expands the content of the cell based on an existing message of the current NGAP such as INITIAL UE MESSAGE, and/or INITIAL CONTEXT SETUP RESPONSE, and/or UE CAPABILITY INFO INDICATION or UPLINK NAS TRANSPORT, and reports directly to the AMF capability indication information indicating whether a single current serving NG-RAN node can support the "special type of user service" (i.e., the above-mentioned "target service", hereinafter the same) for the terminal in the SC mode.

Optionally, the step S502 can also be implemented in the following manner: in a case where the first serving base station has established the connection to the terminal and a serving base station of the terminal is switched to the first serving base station from a second serving base station, the step in which the first serving base station expands the content of the cell of the original control signaling includes at least one of: the first serving base station expands content of a cell of a path switch request message (PATH SWITCH REQUEST), or the first serving base station expands content of a cell of a handover request acknowledgement message (HANDOVER REQUEST ACKNOWLEDGE).

FIG. 7 is a schematic diagram of a transmission of enhanced content of an existing NGAP process message when a UE is moving according to an embodiment of the present disclosure. As shown in FIG. 7, the above operations can be understood as that for a terminal (UE) which is undergoing the master serving base station (MN) change, the NG-RAN node adds or expands the content of the cell based on an existing message of the current NGAP such as PATH SWITCH REQUEST, and/or HANDOVER REQUEST ACKNOWLEDGE, and reports directly to the AMF capability indication information indicating whether each of a single or multiple current serving NG-RAN node(s) can support the "special type of user service".

Optionally, the step S502 can also be implemented in the following manner: in a case where the first serving base station is a master base station (MN) in a DC/MC operation, the step in which the first serving base station expands the content of the cell of the original control signaling includes at least one of: the first serving base station expands content of a cell of a protocol data unit (PDU) session resource modify indication message (PDU SESSION RESOURCE MODIFY INDICATION), the first serving base station expands content of a cell of a terminal capability information indication message (UE CAPABILITY INFO INDICATION), or the first serving base station expands content of a cell of an uplink non-radio access layer transport message (UPLINK NAS TRANSPORT).

It is to be noted that the DC/MC operation refers to that a terminal is connected to two or more serving base stations simultaneously. When the terminal is connected to two serving base stations simultaneously, it is called the DC operation, and in this case, the two serving base stations consist of a master base station (MN) and a secondary base station (SN). When the terminal is connected to multiple serving base stations simultaneously, it is called the MC operation, and in this case, the multiple serving base stations consist of one master base station (MN) and multiple secondary base stations (SNs).

FIG. 8 is a schematic diagram of a transmission of enhanced content of an existing NGAP process message when a UE is in dual/multiple-single connectivity mode according to an embodiment of the present disclosure. As shown in FIG. 8, the above operations can be understood as that for a terminal (UE) which is in a DC/MC configuration operation mode, the NG-RAN node adds or expands the content of the cell based on an existing message of the current NGAP such as PDU SESSION RESOURCE MODIFY INDICATION, and/or UE CAPABILITY INFO INDICATION, and/or UPLINK NAS TRANSPORT, and reports directly to the AMF capability indication information indicating whether each of a single or multiple current serving NG-RAN node(s) can support the "special type of user service".

Optionally, the step in which the first serving base station transmits the control signaling carrying the indication information to the logical upper layer or the logical upstream includes: the first serving base station transmits the control signaling carrying the indication information to a core network. The core network at least includes an AMF and/or an SMF.

Optionally, the step S502 can also be implemented in the following manner: in a case where the first serving base station is a secondary base station (SN) in a DC/MC operation, the step in which the first serving base station expands the content of the cell of the original control signaling includes at least one of: the first serving base station expands content of a cell of an SN addition request acknowledgement message (S-NODE ADDITION REQUEST ACKNOWLEDGE), the first serving base station expands content of a cell of an SN modification request acknowledgement message (S-NODE MODIFICATION REQUEST ACKNOWLEDGE), or the first serving base station expands content of a cell of an SN modification required message (S-NODE MODIFICATION REQUIRED).

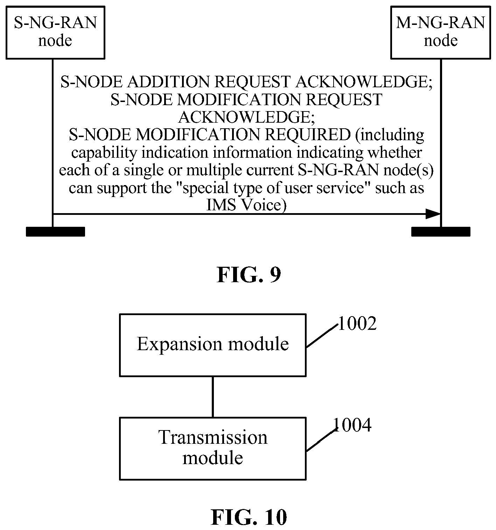

FIG. 9 is a schematic diagram of a transmission of enhanced content of an existing XnAP process message when a UE is in dual/multiple-single connectivity mode according to an embodiment of the present disclosure. As shown in FIG. 9, the above operations can be understood as that for a terminal (UE) which is in a DC/MC configuration operation mode, the SN adds or expands the content of the cell based on an existing message of the current XnAP such as S-NODE ADDITION REQUEST ACKNOWLEDGE, or S-NODE MODIFICATION REQUEST ACKNOWLEDGE, or S-NODE MODIFICATION REQUIRED, and reports directly to the MN capability indication information indicating whether each of a single or multiple current SN(s) can support the "special type of user service".

Optionally, the step in which the first serving base station transmits the control signaling carrying the indication information to the logical upper layer or the logical upstream includes: the first serving base station transmits the control signaling carrying the indication information to an MN corresponding to the first serving base station.

Optionally, the indication information is at least used for indicating whether the first serving base station supports the target service under one of the following radio access types (RATs): an NR RAT, or an E-UTRA RAT. The above capability information indicating whether the "special type of user service" can be supported corresponding to different RAT types may be borne by a single joint cell or multiple independent cells. Optionally, the step in which the first serving base station expands the content of the cell of the original control signaling includes one of: the first serving base station expands a single joint cell on original control signaling, where the single joint cell is used for carrying the indication information in a joint manner; or the first serving base station expands multiple independent cells on the original control signaling, where each independent cell is used for carrying the indication information in an independent manner.

Optionally, the target service includes at least one of: an IMS voice service, or an IMS video service, or an IMS emergency call service. The following is illustrated by using the IMS voice service as an example, that is, the content of the indication information is: IMS Voice Support Indicator = supported or not supported, or IMS Voice Support Indicator with S-Node = supported or not supported.

With the above description, in the embodiments of the present disclosure, the terminal (UE) in various 5G-oriented SC/DC/MC configuration operation modes enables the AMF/SMF entities to know in time, with less process signaling overhead, whether the UE capability and current function configuration on the MN side can support the "special type of user service" including the IMS voice service conditions; and meanwhile, the terminal (UE) enables the MN master to know in time whether the UE capability on the SN side and current function configuration on the SN side can support the "special type of user service" including the IMS voice service conditions. In this manner, the AMF/SMF entities or the MN do not need to perform the UE radio capability check process repeatedly on the correspondent node, and the PDU Session/QoS Flows including the "special type of user service" such as the IMS Voice service can be securely and flexibly established on or shunted to the MN or SN side, thereby avoiding unnecessary cross-system fallback processing of the terminal (UE) and implementing the load balancing of user service data flows in the NG-RAN.

From the description the preceding embodiment, it is apparent to those skilled in the art that the method in the preceding embodiment may be implemented by software plus a necessary general-purpose hardware platform, or may of course be implemented by hardware. However, in many cases, the former is a preferred implementation. Based on this understanding, the solution provided by the present application may be embodied in the form of a computer software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, or the like) to execute the method according to each embodiment of the present application.

### Embodiment two

In this embodiment, a device for transmitting control signaling is further provided. The device is configured to implement the preceding embodiments and preferred implementations. What has been described will not be repeated. As used below, the term "module" may be software, hardware, or a combination thereof capable of implementing predetermined functions. The device in the embodiment described below is preferably implemented by software, but an implementation by hardware or by a combination of software and hardware is also possible and conceivable.

FIG. 10 is a structural block diagram of a device for transmitting control signaling according to an embodiment of the present disclosure. As shown in FIG. 10, the device is applied to a first serving base station, and includes: an expansion module 1002, which is configured to expand content of a cell of original control signaling to obtain control signaling carrying indication information, where the indication information is used for indicating whether the first serving base station supports a target service in a current node configuration and status condition; and a transmission module 1004, which is configured to transmit the control signaling carrying the indication information to a logical upper layer or logical upstream.

Through the above device, problems in the related art that steps in a terminal radio capability check process are cumbersome, whether the current function configuration on the serving base station side supports the target service cannot be known in time, and thus the data flows bearing user services cannot be distributed in the next generation radio access network in a balanced and efficient way can be solved. In this manner, the upper layer network entities can flexibly establish or shunt target service to the serving base station side, thereby avoiding unnecessary cross-system fallback processing of the terminal (UE) and implementing the load balancing of user service data flow in the next generation radio access network.

Optionally, in the case where the connection established between the first serving base station and the terminal is an initial service connection, the expansion module includes a first expansion unit, which is configured to execute at least one of the following operations: expending content of a cell of an initial terminal message (INITIAL UE MESSAGE), expending content of a cell of an initial context setup response message (INITIAL CONTEXT SETUP RESPONSE), expending content of a cell of a terminal capability information indication message (UE CAPABILITY INFO INDICATION), or expending content of a cell of an uplink non-radio access layer transport message (UPLINK NAS TRANSPORT).

The above operations can be understood as that for a terminal (UE) which is not undergoing any serving base station change and is not in the DC/MC configuration operation, the first expansion unit adds or expands the content of the cell based on an existing message of the current NGAP such as INITIAL UE MESSAGE, and/or INITIAL CONTEXT SETUP RESPONSE, and/or UE CAPABILITY INFO INDICATION, or UPLINK NAS TRANSPORT, and reports directly to the AMF capability indication information indicating whether a single current serving NG-RAN node can support the "special type of user service" (i.e., the above-mentioned "target service", hereinafter the same) for the terminal in the SC mode.

Optionally, when the first serving base station has established the connection to the terminal and a serving base station of the terminal is switched to the first serving base station from a second serving base station, the expansion module includes a second expansion unit, which is configured to execute at least one of the following operations: expending content of a cell of a path switch request message (PATH SWITCH REQUEST), or expending content of a cell of a handover request acknowledgement message (HANDOVER REQUEST ACKNOWLEDGE).

The above operations can be understood as that for a terminal (UE) which is undergoing the MN change, the second expansion unit adds or expands the content of the cell based on an existing message of the current NGAP such as PATH SWITCH REQUEST, and/or HANDOVER REQUEST ACKNOWLEDGE, and reports directly to the AMF capability indication information indicating whether each of a single or multiple current serving NG-RAN node(s) can support the "special type of user service".

Optionally, when the first serving base station is an MN in a DC/MC operation, the expansion module includes a third expansion unit, which is configured to execute at least one of the following operations: expending content of a cell of a protocol data unit (PDU) session resource modify indication message (PDU SESSION RESOURCE MODIFY INDICATION), expending content of a cell of a terminal capability information indication message (UE CAPABILITY INFO INDICATION), or expending content of a cell of an uplink non-radio access layer transport message (UPLINK NAS TRANSPORT).

The above operations can be understood as that for a terminal (UE) which is in a DC/MC configuration operation mode, the third expansion unit adds or expands the content of the cell based on an existing message of the current NGAP such as PDU SESSION RESOURCE MODIFY INDICATION, and/or UE CAPABILITY INFO INDICATION, and/or UPLINK NAS TRANSPORT, and reports directly to the AMF capability indication information indicating whether each of a single or multiple current serving NG-RAN node(s) can support the "special type of user service".

Optionally, when the first serving base station is an SN in a DC/MC operation, the expansion module includes a fourth expansion unit, which is configured to execute at least one of the following operations: expending content of a cell of an SN addition request acknowledgement message (S-NODE ADDITION REQUEST ACKNOWLEDGE), expending content of a cell of an SN modification request acknowledgement message (S-NODE MODIFICATION REQUEST ACKNOWLEDGE), or expending content of a cell of an SN modification required message (S-NODE MODIFICATION REQUIRED).

The above operations can be understood as that for a terminal (UE) which is in a DC/MC configuration operation mode, the fourth expansion unit adds or expands the content of the cell based on an existing message of the current XnAP such as S-NODE ADDITION REQUEST ACKNOWLEDGE, or S-NODE MODIFICATION REQUEST ACKNOWLEDGE, or S-NODE MODIFICATION REQUIRED, and reports directly to the MN capability indication information indicating whether each of a single or multiple current SN(s) can support the "special type of user service" .

Optionally, the target service includes at least one of: an Internet protocol multimedia subsystem voice (IMS Voice) service, or an IMS video (IMS Video) service, or an IMS emergency call service.

Optionally, the indication information is at least used for indicating whether the first serving base station supports the target service under one of the following radio access types (RATs): an NR RAT, or an E-UTRA RAT.

Optionally, the step in which the first serving base station expands the content of the cell of the original control signaling includes one of: the first serving base station expands a single joint cell on the original control signaling, where the single joint cell is used for carrying the indication information in a joint manner; or the first serving base station expands multiple independent cells on the original control signaling, where each independent cell is used for carrying the indication information in an independent manner.

Optionally, the target service includes at least one of: an Internet protocol multimedia subsystem voice (IMS Voice) service, or an IMS video service, or an IMS emergency call service. Using the IMS voice service as an example for description, the content of the indication information is: IMS Voice Support Indicator = supported or not supported, or IMS Voice Support Indicator with S-Node = supported or not supported.

With the above description, in the embodiments of the present disclosure, the terminal (UE) in various 5G-oriented SC/DC/MC configuration operation modes enables the AMF/SMF entities to know in time, with less process signaling overhead, whether the UE capability and current function configuration on the MN side can support the "special type of user service" including the IMS voice service conditions; and meanwhile, the terminal (UE) enables the MN master to know in time whether the UE capability and current function configuration on the SN side can support the "special type of user service" including the IMS voice service conditions. In this manner, the AMF/SMF entities or the MN do not need to perform the UE radio capability check process repeatedly on the correspondent node, and the PDU Session/QoS Flows including the "special type of user service" such as the IMS Voice services can be securely and flexibly established on or shunted to the MN or SN side, thereby avoiding unnecessary cross-system fallback processing of the terminal (UE) and implementing the load balancing of user service data flows in the NG-RAN.

A serving base station is further provided according to another embodiment of the present application. The serving base station includes: an expansion module, which is configured to expand content of a cell of original control signaling to obtain control signaling carrying indication information, where the indication information is used for indicating whether the serving base station supports a target service, and the serving base station has established a connection to a terminal; and a transmission module, which is configured to transmit the control signaling carrying the indication information to a logical upper layer or logical upstream.

The serving base station provided in the embodiment of the present disclosure is configured to implement the preceding method for transmitting control signaling, can also be configured to bear the device for transmitting control signaling, and what has been described will not be repeated.

It is to be noted that each module described above may be implemented by software or hardware. An implementation by hardware may, but not necessarily, be performed in the following manners: the various modules described above are located in the same processor, or the various modules described above are located in their respective processors in any combination form.

### Embodiment three

For a better understanding of the solutions in the embodiments described above, the implementation modes in the solutions of the present application are described in detail through several embodiments described below.

### Embodiment 1:

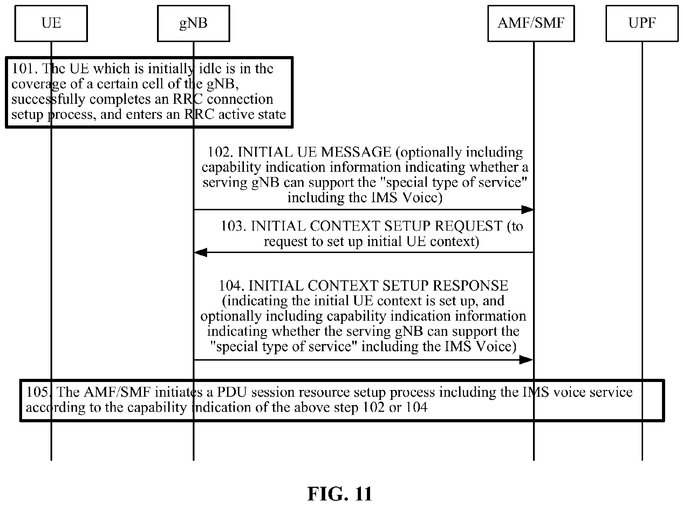

FIG. 11 is a flowchart of a method for transmitting control signaling according to embodiment 1 of the present application. As shown in FIG. 11, a certain UE and a gNB support the IMS voice service, and the UE which is initially idle is in the coverage of a certain cell of the gNB, which is equivalent to that the initial connection is established between the UE and the serving base station. Specific process steps are described below.

In step 101, the UE which is initially idle is in the coverage of a certain cell of the gNB, successfully completes a radio resource control (RRC) connection setup process, and enters an RRC active state.

In step 102, the gNB directly reports INITIAL UE MESSAGE (which may include capability indication information indicating whether a serving gNB can support the "special type of service" including the IMS Voice: IMS Voice Support Indicator = supported) to the AMF

In step 103, the AMF subsequently initiates INITIAL CONTEXT SETUP REQUEST (to request to set up an initial UE context).

In step 104, the gNB replies with INITIAL CONTEXT SETUP RESPONSE (to set up the initial UE context, and the response optionally includes capability indication information indicating whether the serving gNB can support the "special type of service" including the IMS Voice: IMS Voice Support Indicator = supported).

In step 105, the AMF/SMF initiates a PDU Session Resource Setup process including the IMS voice service according to the capability indication of the above step 102 or 104.

### Embodiment 2:

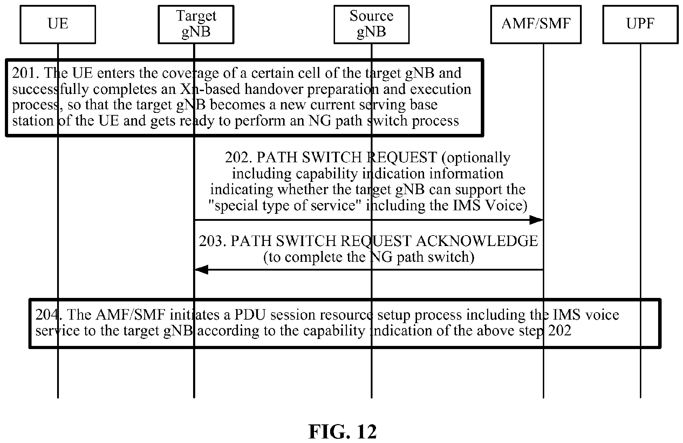

FIG. 12 is a flowchart of a method for transmitting control signaling according to embodiment 2 of the present application. As shown in FIG. 12, both a certain UE and a target gNB support the IMS voice service, and the UE enters the coverage of a certain cell of the target gNB and successfully completes an Xn-based handover preparation and execution process, so that the target gNB becomes a current new serving base station of the UE and gets ready to perform an NG path switch process. Specific process steps are described below.

In step 201, the UE enters the coverage of a certain cell of the target gNB and successfully completes an Xn-based handover preparation and execution process, so that the target gNB becomes a new current serving base station of the UE and gets ready to perform an NG path switch process.

In step 202, the target gNB initiates PATH SWITCH REQUEST (which optionally includes capability indication information indicating whether the target gNB can support the "special type of service" including the IMS Voice: IMS Voice Support Indicator = supported), and directly reports the PATH SWITCH REQUEST to the AMF.

In step 203, the AMF replies with PATH SWITCH REQUEST ACKNOWLEDGE (to complete the NG path switch).

In step 204, the AMF/SMF initiates a PDU Session Resource Setup process including the IMS voice service to the target gNB according to the capability indication of the above step 202.

### Embodiment 3:

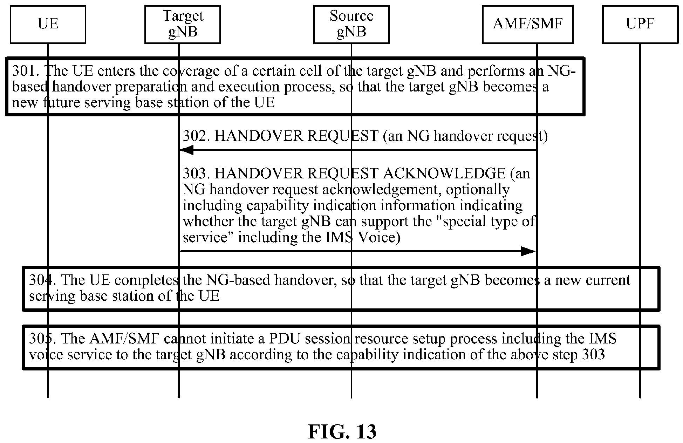

FIG. 13 is a flowchart of a method for transmitting control signaling according to embodiment 3 of the present application. As shown in FIG. 13, a certain UE supports the IMS voice service, but a target gNB does not support the IMS voice service. The UE enters the coverage of a certain cell of the target gNB and successfully completes an Xn-based handover preparation and execution process, so that the target gNB becomes a current new serving base station of the UE and gets ready to perform an NG path switch process. Specific process steps are described below.

In step 301, the UE enters the coverage of a certain cell of the target gNB and performs an NG-based handover preparation and execution process, so that the target gNB becomes a new future serving base station of the UE.

In step 302, the AMF initiates HANDOVER REQUEST (an NG handover request) to the target gNB.

In step 303, the target gNB replies with HANDOVER REQUEST ACKNOWLEDGE (an NG handover request acknowledgement, optionally including capability indication information indicating whether the target gNB can support the "special type of service" including the IMS Voice: IMS Voice Support Indicator = Not supported), and directly reports the HANDOVER REQUEST ACKNOWLEDGE to the AMF.

In step 304, the UE completes the NG-based handover, so that the target gNB becomes a new current serving base station of the UE.

In step 305, the AMF/SMF cannot initiate a PDU Session Resource Setup process including the IMS voice service to the target gNB according to the capability indication of the above step 303.

### Embodiment 4:

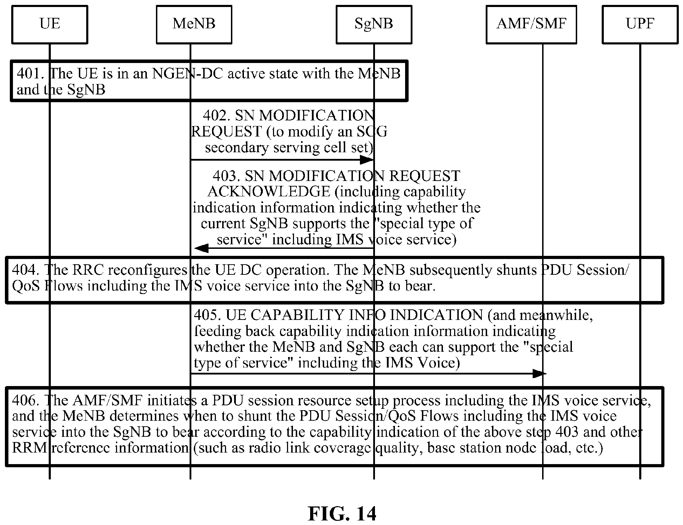

FIG. 14 is a flowchart of a method for transmitting control signaling according to embodiment 4 of the present application. As shown in FIG. 14, a certain UE supports an NGEN-DC configuration and operation, and local functions and capability sets of the UE, an MeNB and an SgNB support the IMS voice service. Specific process steps are described below.

In step 401, the UE is in an NGEN-DC active state with the MeNB and the SgNB.

In step 402, the MeNB decides that a SCG secondary serving cell set in the current SgNB needs to be modified based on RRM measurement reporting of the UE, and the MeNB transmits SN Modification Request message to the SgNB, where the SN Modification Request message includes necessary SCG reconfiguration assistance parameters.

In step 403, the SgNB returns SN Modification Request Acknowledgement message to the MeNB, where the SN Modification Request Acknowledgement message includes necessary SCG reconfiguration result information and at least further includes new capability indication information indicating whether the current SgNB supports the IMS voice service, such as IMS Voice Support Indicator with S-Node = supported.

In step 404, the RRC reconfigures the UE DC operation. The MeNB subsequently shunts PDU Session/QoS Flows including the IMS voice service into the SgNB to bear.

In step 405, the MeNB directly initiates UE CAPABILITY INFO INDICATION to the AMF (and meanwhile, feeds back capability indication information indicating whether the MeNB and SgNB each can support the "special type of service" including the IMS Voice: IMS Voice Support Indicator = supported; and IMS Voice Support Indicator with S-Node = supported).

In step 406, the AMF/SMF initiates a PDU Session Resource Setup process including the IMS voice service, and the MeNB determines when to shunt the PDU Session/QoS Flows including the IMS voice service into the SgNB to bear according to the capability indication of the above step 403 and other RRM reference information (such as radio link coverage quality, base station node load, etc.).

### Embodiment 5:

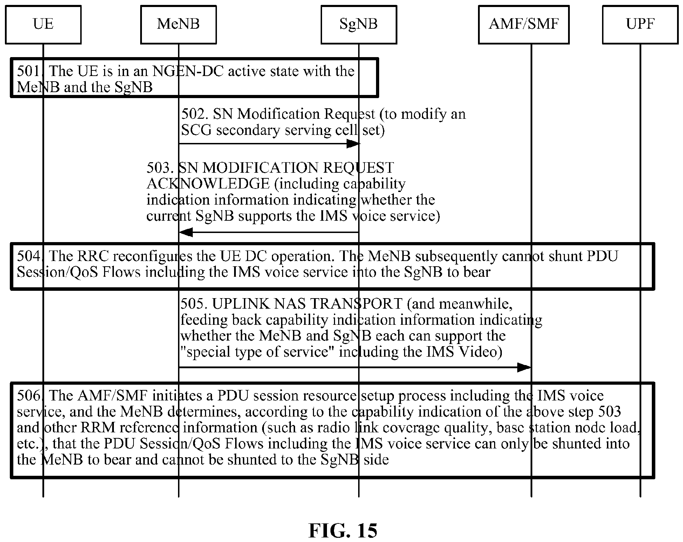

FIG. 15 is a flowchart of a method for transmitting control signaling according to embodiment 5 of the present application. As shown in FIG. 15, a certain UE supports an NGEN-DC configuration and operation, and local functions and capability sets of the UE and an MeNB support the IMS video service, but an SgNB does not support the IMS video service. Specific process steps are described below.

In step 501, the UE is in an NGEN-DC active state with the MeNB and the SgNB.

In step 502, the MeNB decides that a current SCG secondary serving cell set in the SgNB needs to be modified based on RRM measurement reporting of the UE, and the MeNB transmits SN Modification Request message to the SgNB, where the SN Modification Request message includes necessary SCG reconfiguration assistance parameters.

In step 503, the SgNB returns SN Modification Request Acknowledgement message to the MeNB, where the SN Modification Request Acknowledgement message includes necessary SCG reconfiguration result information and at least further includes new capability indication information indicating whether the current SgNB supports the IMS video service, such as IMS Video Support Indicator with S-Node = Not supported.

In step 504, the RRC reconfigures the UE DC operation. The MeNB subsequently cannot shunt PDU Session/QoS Flows including the IMS video service into the SgNB to bear.

In step 505, the MeNB directly initiates UPLINK NAS TRANSPORT message to the AMF (and meanwhile, feeds back capability indication information indicating whether the MeNB and SgNB each can support the "special type of service" including the IMS Video: IMS Video Support Indicator = supported; and IMS Video Support Indicator with S-Node = Not supported).

In step 506, the AMF/SMF initiates a PDU Session Resource Setup process including the IMS Video, and the MeNB determines, according to the capability indication of the above step 503 and other RRM reference information (such as radio link coverage quality, base station node load, etc.), that the PDU Session/QoS Flows including the IMS video service can only be shunted into the MeNB to bear and cannot be shunted to the SgNB side.

### Embodiment 6:

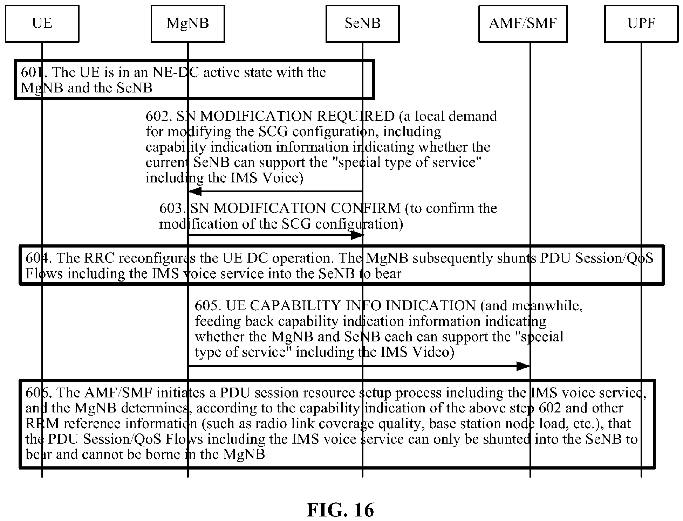

FIG. 16 is a flowchart of a method for transmitting control signaling according to embodiment 6 of the present application. As shown in FIG. 16, a certain UE supports an NE-DC configuration and operation, and local functions and capability sets of the UE and an SeNB support the IMS video service, but an MgNB does not support the IMS video service. Specific process steps are described below.

In step 601, the UE is in an NE-DC active state with the MgNB and the SeNB.

In step 602, the SeNB decides that the current SCG configuration needs to be modified based on RRM measurement reporting of the UE, and initiates SN MODIFICATION REQUIRED (a local demand for modifying the SCG configuration, including capability indication information indicating whether the current SeNB can support the "special type of service" including the IMS Video: IMS Video Support Indicator with S-Node = supported) to the MgNB.

In step 603, the MgNB replied SN MODIFICATION CONFIRM (to confirm the modification of the SCG configuration) to the SeNB.

In step 604, the RRC reconfigures the UE DC operation. The MgNB subsequently shunts PDU Session/QoS Flows including the IMS video service into the SeNB to bear.

In step 605, the MgNB directly initiates UE CAPABILITY INFO INDICATION to the AMF (and meanwhile, feeds back capability indication information indicating whether the MgNB and SeNB each can support the "special type of service" including the IMS Video: IMS Video Support Indicator = Not supported; and IMS Video Support Indicator with S-Node = supported).

In step 606, the AMF/SMF initiates a PDU Session Resource Setup process including the IMS video service, and the MgNB determines, according to the capability indication of the above step 602 and other RRM reference information (such as radio link coverage quality, base station node load, etc.), that the PDU Session/QoS Flows including the IMS video service can only be shunted into the SeNB to bear and cannot be borne in the MgNB.

### Embodiment four

A storage medium is further provided in the embodiment of the present application. The storage medium stores a computer program. The computer program is configured to, when executed, perform the steps of any one of the preceding method embodiments.

Optionally, in the embodiment, the preceding storage medium may be configured to store a computer program for performing steps described below.

In S1, content of a cell of original control signaling is expanded to obtain control signaling carrying indication information, where the indication information is used for indicating whether a first serving base station supports a target service in a current node configuration and status condition. In S2, the control signaling carrying the indication information is transmitted to the logical upper layer or the logical upstream.

Optionally, the storage medium is further configured to store a computer program for performing the following steps: expending content of a cell of an initial terminal message (INITIAL UE MESSAGE), expending content of a cell of an initial context setup response message (INITIAL CONTEXT SETUP RESPONSE), expending content of a cell of a terminal capability information indication message (UE CAPABILITY INFO INDICATION), and expending content of a cell of an uplink non-radio access layer transport message (UPLINK NAS TRANSPORT).

Optionally, the storage medium is further configured to store a computer program for performing the following steps: expending content of a cell of a path switch request message (PATH SWITCH REQUEST), and expending content of a cell of a handover request acknowledgement message (HANDOVER REQUEST ACKNOWLEDGE).

Optionally, the storage medium is further configured to store a computer program for performing the following steps: expending content of a cell of a protocol data unit session resource modify indication message (PDU SESSION RESOURCE MODIFY INDICATION), expending content of a cell of a terminal capability information indication message (UE CAPABILITY INFO INDICATION), and expending content of a cell of an uplink non-radio access layer transport message (UPLINK NAS TRANSPORT).

Optionally, the storage medium is further configured to store a computer program for performing the following steps: expending content of a cell of an SN addition request acknowledgement message (S-NODE ADDITION REQUEST ACKNOWLEDGE), expending content of a cell of an SN modification request acknowledgement message (S-NODE MODIFICATION REQUEST ACKNOWLEDGE), and expending content of a cell of an SN modification required message (S-NODE MODIFICATION REQUIRED).

Optionally, in this embodiment, the preceding storage medium may include, but is not limited to, a USB flash disk, a ROM, a RAM, a mobile hard disk, a magnetic disk, an optical disk, or another medium capable of storing a computer program.

An electronic device is further provided in the embodiment of the present application. The electronic device includes a memory and a processor. The memory stores a computer program, and the processor is configured to execute the computer program to perform the steps of any one of the preceding method embodiments.

Optionally, the electronic device may further include a transmission device and an input/output device. Both the transmission device and the input/output device are connected to the preceding processor.

Optionally, in this embodiment, the preceding processor may be configured to perform the following steps through a computer program. In S1, content of a cell of original control signaling is expanded to obtain control signaling carrying indication information, where the indication information is used for indicating whether a first serving base station supports a target service in a current node configuration and status condition. In S2, the control signaling carrying the indication information is transmitted to the logical upper layer or the logical upstream.

Optionally, the processor is further configured to be used for executing a computer program for performing the following steps through a computer program: expending content of a cell of an initial terminal message (INITIAL UE MESSAGE), expending content of a cell of an initial context setup response message (INITIAL CONTEXT SETUP RESPONSE), expending content of a cell of a terminal capability information indication message (UE CAPABILITY INFO INDICATION), and expending content of a cell of an uplink non-radio access layer transport message (UPLINK NAS TRANSPORT).

Optionally, the processor is further configured to be used for executing a computer program for performing the following steps through a computer program: expending content of a cell of a path switch request message (PATH SWITCH REQUEST), and expending content of a cell of a handover request acknowledgement message (HANDOVER REQUEST ACKNOWLEDGE).

Optionally, the processor is further configured to be used for executing a computer program for performing the following steps through a computer program: expending content of a cell of a protocol data unit session resource modify indication message (PDU SESSION RESOURCE MODIFY INDICATION), expending content of a cell of a terminal capability information indication message (UE CAPABILITY INFO INDICATION), and expending content of a cell of an uplink non-radio access layer transport message (UPLINK NAS TRANSPORT).

Optionally, the processor is further configured to be used for executing a computer program for performing the following steps through a computer program: expending content of a cell of an SN addition request acknowledgement message (S-NODE ADDITION REQUEST ACKNOWLEDGE), expending content of a cell of an SN modification request acknowledgement message (S-NODE MODIFICATION REQUEST ACKNOWLEDGE), and expending content of a cell of an SN modification required message (S-NODE MODIFICATION REQUIRED).

Optionally, for specific examples in this embodiment, reference may be made to the examples described in the preceding embodiments and optional implementations, and the specific examples will not be repeated in this embodiment.

Apparently, it to be understood by those skilled in the art that each of the modules or steps of the present application may be implemented by a general-purpose computing device and may be concentrated on a single computing device or distributed on a network formed by multiple computing devices. Optionally, these modules or steps may be implemented by program codes executable by the computing device. Thus, these modules or steps may be stored in a storage device and executed by the computing device. Moreover, in some cases, the illustrated or described steps may be executed in sequences different from the sequence described herein. Alternatively, these modules or steps may be implemented by being made into one or more integrated circuit modules separately or multiple ones of these modules or steps may be implemented by being made into a single integrated circuit module. In this manner, the present application is not limited to any specific combination of hardware and software.

The above are only embodiments of the present application and are not intended to limit the present application, and for those skilled in the art, the present application may have various modifications and variations. Any modifications, equivalent substitutions, improvements and the like made within the principle of the present application should fall within the scope of the present application.

## Claims

1. A method for transmitting control signaling, comprising:
expanding, by a first serving base station, content of a cell of original control signaling to obtain control signaling carrying indication information, wherein the indication information is used for indicating whether the first serving base station supports a target service in a current node configuration and status condition, and the first serving base station has established a connection to a terminal; and
transmitting, by the first serving base station, the control signaling carrying the indication information to a logical upper layer or logical upstream.

2. The method of claim 1, wherein in a case where the connection established between the first serving base station and the terminal is an initial service connection, expanding, by the first serving base station, the content of the cell of the original control signaling comprises at least one of:
expending, by the first serving base station, content of a cell of an initial terminal message (INITIAL UE MESSAGE);
expending, by the first serving base station, content of a cell of an initial context setup response message (INITIAL CONTEXT SETUP RESPONSE);
expending, by the first serving base station, content of a cell of a terminal capability information indication message (UE CAPABILITY INFO INDICATION); or
expending, by the first serving base station, content of a cell of an uplink non-radio access layer transport message (UPLINK NAS TRANSPORT).

3. The method of claim 1, wherein in a case where the first serving base station has established the connection to the terminal and a serving base station of the terminal is switched to the first serving base station from a second serving base station, expanding, by the first serving base station, the content of the cell of the original control signaling comprises at least one of:
expending, by the first serving base station, content of a cell of a path switch request message (PATH SWITCH REQUEST); or
expending, by the first serving base station, content of a cell of a handover request acknowledgement message (HANDOVER REQUEST ACKNOWLEDGE).

4. The method of claim 1, wherein in a case where the first serving base station is a master node (MN) in a dual/multiple connectivity operation, expanding, by the first serving base station, the content of the cell of the original control signaling comprises at least one of:
expending, by the first serving base station, content of a cell of a protocol data unit (PDU) session resource modify indication message (PDU SESSION RESOURCE MODIFY INDICATION);
expending, by the first serving base station, content of a cell of a terminal capability information indication message (UE CAPABILITY INFO INDICATION); or
expending, by the first serving base station, content of a cell of an uplink non-radio access layer transport message (UPLINK NAS TRANSPORT).

5. The method of any one of claims 2 to 4, wherein transmitting, by the first serving base station, the control signaling carrying the indication information to the logical upper layer or the logical upstream comprises:
transmitting, by the first serving base station, the control signaling carrying the indication information to a core network.

6. The method of claim 1, wherein in a case where the first serving base station is a secondary node (SN) in a dual/multiple connectivity operation, expanding, by the first serving base station, the content of the cell of the original control signaling comprises at least one of:
expending, by the first serving base station, content of a cell of an SN addition request acknowledgement message (S-NODE ADDITION REQUEST ACKNOWLEDGE);
expending, by the first serving base station, content of a cell of an SN modification request acknowledgement message (S-NODE MODIFICATION REQUEST ACKNOWLEDGE); or
expending, by the first serving base station, content of a cell of an SN modification required message (S-NODE MODIFICATION REQUIRED).

7. The method of claim 6, wherein transmitting, by the first serving base station, the control signaling carrying the indication information to the logical upper layer or the logical upstream comprises:
transmitting, by the first serving base station, the control signaling carrying the indication information to an MN corresponding to the first serving base station.

8. The method of any one of claims 1 to 4 or any one of claims 6 to 7, wherein the indication information is at least used for indicating whether the first serving base station supports the target service under one of the following radio access types (RATs): a fifth generation (5G) new radio (NR) access technology system RAT, or a 5G evolved universal mobile telecommunications system (UMTS) terrestrial radio access (E-UTRA) system RAT.

9. The method of claim 8, wherein expanding, by the first serving base station, the content of the cell of the original control signaling comprises one of:
expanding, by the first serving base station, a single joint cell on the original control signaling, wherein the single joint cell is used for carrying the indication information in a joint manner; or
expanding, by the first serving base station, a plurality of independent cells on the original control signaling, wherein each of the plurality of independent cells is used for carrying the indication information in an independent manner.

10. The method of any one of claims 1 to 4 or any one of claims 6 to 7, wherein the target service comprises at least one of: an Internet protocol multimedia subsystem voice (IMS Voice) service, or an IMS emergency call service.

11. A device for transmitting control signaling, applied to a first serving base station, comprising:
an expansion module, which is configured to expand content of a cell of original control signaling to obtain control signaling carrying indication information, wherein the indication information is used for indicating whether the first serving base station supports a target service in a current node configuration and status condition, and the first serving base station has established a connection to a terminal; and
a transmission module, which is configured to transmit the control signaling carrying the indication information to a logical upper layer or logical upstream.

12. The device of claim 11, wherein in a case where the connection established between the first serving base station and the terminal is an initial service connection, the expansion module comprises:
a first expansion unit, which is configured to execute at least one of the following operations:
expending content of a cell of an initial terminal message (INITIAL UE MESSAGE);
expending content of a cell of an initial context setup response message (INITIAL CONTEXT SETUP RESPONSE);
expending content of a cell of a terminal capability information indication message (UE CAPABILITY INFO INDICATION); or
expending content of a cell of an uplink non-radio access layer transport message (UPLINK NAS TRANSPORT).

13. The device of claim 11, wherein in a case where the first serving base station has established the connection to the terminal and a serving base station of the terminal is switched to the first serving base station from a second serving base station, the expansion module comprises:
a second expansion unit, which is configured to execute at least one of the following operations:
expending content of a cell of a path switch request message (PATH SWITCH REQUEST); or
expending content of a cell of a handover request acknowledgement message (HANDOVER REQUEST ACKNOWLEDGE).

14. The device of claim 11, wherein in a case where the first serving base station is a master node (MN) in a dual/multiple connectivity operation, the expansion module comprises:
a third expansion unit, which is configured to execute at least one of the following operations:
expending content of a cell of a protocol data unit (PDU) session resource modify indication message (PDU SESSION RESOURCE MODIFY INDICATION);
expending content of a cell of a terminal capability information indication message (UE CAPABILITY INFO INDICATION); or
expending content of a cell of an uplink non-radio access layer transport message (UPLINK NAS TRANSPORT).

15. The device of claim 11, wherein in a case where the first serving base station is a secondary node (SN) in a dual/multiple connectivity operation, the expansion module comprises:
a fourth expansion unit, which is configured to execute at least one of the following operations:
expending content of a cell of an SN addition request acknowledgement message (S-NODE ADDITION REQUEST ACKNOWLEDGE);
expending content of a cell of an SN modification request acknowledgement message (S-NODE MODIFICATION REQUEST ACKNOWLEDGE); or
expending content of a cell of an SN modification required message (S-NODE MODIFICATION REQUIRED).

16. The device of any one of claims 11 to 15, wherein the target service comprises at least one of:
an Internet protocol multimedia subsystem voice (IMS Voice) service, or an IMS video (IMS Video) service, or an IMS emergency call service.

17. A serving base station, comprising:
an expansion module, which is configured to expand content of a cell of original control signaling to obtain control signaling carrying indication information, wherein the indication information is used for indicating whether the serving base station supports a target service, and the serving base station has established a connection to a terminal; and
a transmission module, which is configured to transmit the control signaling carrying the indication information to a logical upper layer or logical upstream.

18. A storage medium, storing a computer program, wherein the computer program is configured to, when executed, perform the method of any one of claims 1 to 10.

19. An electronic apparatus, comprising a memory and a processor, wherein the memory is configured to store a computer program, and the processor is configured to execute the computer program to perform the method of any one of claims 1 to 10.
